Europäisches Patentamt

European Patent Office

Office européen des brevets

(11) Veröffentlichungsnummer: **0 404 059**

**A2**

# (12) EUROPÄISCHE PATENTANMELDUNG

(21) Anmeldenummer: **90111560.0**

(22) Anmeldetag: **19.06.90**

(51) Int. Cl.⁵: **F16B 35/04, A63C 9/00**

(30) Priorität: **20.06.89 DE 8907527 U**

(43) Veröffentlichungstag der Anmeldung:
**27.12.90 Patentblatt 90/52**

(84) Benannte Vertragsstaaten:
**AT CH DE FR IT LI**

(71) Anmelder: **Marker Deutschland GmbH**
**Olympiastrasse 2**
**D-8116 Eschenlohe(DE)**

(72) Erfinder: **Ragaller, Max**
**Griesweg 9**
**D-8108 Krün(DE)**

(74) Vertreter: **Gossel, Hans K., Dipl.-Ing. et al**
**Lorenz, E. Gossel, H. K.,Dipl.-Ing., Philipps, I.,**
**Schäuble, P. B.,Dr., Jackermeier, S.,Dr,**
**Zinnecker, A., Dipl.-Ing., Laufhütte, D,**
**Dipl.-Ing., Ingerle, R. E., Dr.**
**Widenmayerstrasse 23 D-8000 München**
**22(DE)**

(54) **Befestigungsschraube für Montageplatten.**

(57) Zur Erleichterung der Montage von Montageplatten mittels Befestigungsschrauben (1) werden diese vorzugsweise fabrikmäßig in ein Durchgangsloch (4) der Montageplatte eingebracht und in diesen mittels eines Halteelements (3) gehalten. Das Halteelement (3) ist auf den Schaft (2) der Befestigungsschraube (1) aufgebracht, steht wenigstens teilweise radial über den Schaft vor und besteht aus einem elastischen Kunststoff mit hohem Reibungs Koeffizienten.

Fig. 2

EP 0 404 059 A2

## Befestigungsschraube für Montageplatten

Bei Montageplatten,die zum Befestigen eines Gegenstandes an einem anderen dienen, besteht immer dann das Problem der Sicherung der Befestigungsschrauben, wenn diese nicht erst unmittelbar vor der Montage der Montageplatte zugeführt werden.

Bisher wird zur Lösung dieses Problems, das heißt der Sicherung von in Durchgangslöcher der Montageplatte gesteckten Befestigungsschrauben,mit Halteelementen gearbeitet, die an der Montageplatte drehfest angeordnet sind. Sie dienen zum Halten der Befestigungsschraube am Schaft oder am Kopf.

Diese Halteelemente komplizieren die Montageplatten, wenn sie mit diesen einstückig ausgeführt sind. Sind die Halteelemente dagegen separate Teile, so sind Material-und Montagezeitaufwand entsprechend größer.

Die vorliegende Erfindung bezweckt die Vermeidung dieser Nachteile unter Beibehaltung der Sicherung von Befestigungsschrauben in Durchgangslöchern von Montageplatten, in die sie vorzugsweise schon fabrikmäßig und damit vor dem Anbringen der Montageplatte an dem entsprechenden Gegenstand eingesteckt sind.

Ausgehend von Befestigungsschrauben für Montageplatten, die zum Befestigen eines Gegenstandes an einem anderen, insbesondere eines Skibindungsteils an einem Ski, dienen, wobei die Befestigungsschraube nach einem vorzugsweise fabrikmäßigen Einbringen in ein Durchgangsloch der Montageplatte mittels eines Halteelementes gehalten ist, sieht die Neuerung hierzu vor, daß die Befestigungsschraube auf ihrem Schaft das Halteelement trägt, das gegenüber dem Umfang des Schaftes wenigstens teilweise vorsteht und aus einem elastischen Kunststoff mit hohem Reibungskoeffizienten, vorzugsweise aus einem Polyamid, besteht. Der Vorsprung des Haltelementes gegenüber dem Schaft der Befestigungsschraube ist dabei so bemessen, daß er wenigstens der Durchmesserdifferenz zwischen dem Schraubengewinde und dem Durchgangsloch entspricht.

Zweckmäßig trägt die Befestigungsschraube das Halteelement im Einschraubbereich ihres Gewindes. Auf diese Weise kann dann das Halteelement nach der Montage als Sicherung gegen ein ungewolltes Losdrehen dienen.

In konstruktiver Ausgestaltung der Erfindung kann das Halteelement nur auf einem Teil des Umfangs des Schaftes der Befestigungsschraube vorgesehen sein. Diese Ausführung ist besonders einfach und billig herstellbar. So kann beispielsweise durch Aufbringen eines Tropfens des elastischen Kunststoffs auf den Schaft der Befestigungsschraube das Halteelement anschließend die Form einer Kalotte besitzen.

Ein Ausführungsbeispiel des Gegenstandes der Erfindung ist auf der Zeichnung dargestellt und im folgenden beschrieben. Es zeigen:

Fig. 1 die Befestigungsschraube in Seitenansicht und

Fig. 2 die Befestigungsschraube nach Fig. 1 im in ein Durchgangsloch einer Montageplatte eingesteckten Zustand.

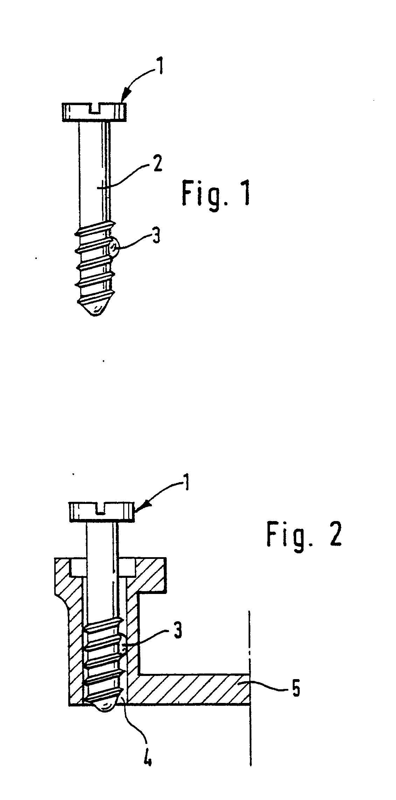

Die Befestigungsschraube 1 nach Fig. 1 trägt auf ihrem Schaft 2 ein Haltelement 3, das gegenüber dem Umfang des Schaftes vorsteht und beispielsweise aus einem Polyamid besteht. Im vorliegenden Fall besitzt das Halteelement die Form einer Kalotte. Es ist so bemessen, daß es wenigstens der Durchmesserdifferenz zwischen dem Schraubengewinde und dem Durchgangsloch 4 einer in Fig. 2 dargestellten und mit 5 bezeichneten Montageplatte entspricht. Diese dient beispielsweise zum Befestigen eines nicht dargestellten Skibindungsteils auf einem ebenfalls nicht dargestellten Ski.

Aus Fig. 2 ist erkennbar, daß das Halteelement 3 beim Einführen der Befestigungsschraube in die Montageplatte 5 was vorzugsweise schon fabrikmäßig erfolgt, zusammengedrückt wird und somit die Befestigungsschraube gegen ungewolltes Herausfallen aus dem Loch beim Verpacken oder Anbringen der Montageplatte sichert.

Vorzugsweise ist, wie dargestellt, das Halteelement 3 im Einschraubbereich des Gewindes der Befestigungsschraube 1 vorgesehen. Damit dient das Halteelement nach der Montage der Montageplatte als Sicherung gegen ein ungewolltes Losdrehen der Befestigungsschraube.

## Ansprüche

1. Befestigungsschraube für Montageplatten, die zum Befestigen eines Gegenstandes an einem anderen, insbesondere eines Skibindungsteils an einem Ski, dienen, wobei die Befestigungsschraube nach einem vorzugsweise fabrikmäßigen Einbringen in ein Durchgangsloch der Montageplatte mittels eines Halteelementes gehalten ist, dadurch gekennzeichnet, daß die Befestigungsschraube (1) auf ihrem Schaft (2) das Halteelement (3) trägt, das gegenüber dem Umfang des Schaftes wenigstens teilweise vorsteht und aus einem elastischen Kunststoff mit hohem Reibungskoeffizienten, vorzugsweise aus einem Polyamid, besteht.

2. Befestigungsschraube nach Anspruch 1, dadurch gekennzeichnet, daß sie (1) das Halteelement (3) im Einschraubbereich ihres Gewindes trägt.

3. Befestigungsschraube nach Anspruch 1 oder 2, dadurch gekennzeichnet, daß das Halteelement (3) nur auf einem Teil des Umfangs ihres Schaftes (2) vorgesehen ist.

4. Befestigungsschraube nach Anspruch 3, dadurch gekennzeichnet, daß das Halteelement (3) die Form einer Kalotte besitzt.

1

2

Fig. 1

3

1

Fig. 2

3

5

4